# EUROPÄISCHE PATENTSCHRIFT

(11) **EP 1 556 213 B1**
(45) Veröffentlichungstag und Bekanntmachung des Hinweises auf die Patenterteilung: **12.04.2006**
(21) Anmeldenummer: 03795790.9
(22) Anmeldetag: 21.10.2003
(51) Int. Cl.: B32B 27/12

(54) **MEHRSCHICHT LAMINATE ZUM VERSTEIFEN**
MULTI-LAYER REINFORCING LAMINATE
STRATIFIES MULTICOUCHES DE RENFORCEMENT

(30) Priorität: 30.10.2002 DE 10250780
(43) Veröffentlichungstag der Anmeldung: 27.07.2005
(73) Patentinhaber: Henkel Kommanditgesellschaft auf Aktien, 40589 Düsseldorf (DE); Dr. Ing. h.c. F. Porsche Aktiengesellschaft, 70435 Stuttgart (DE)
(72) Erfinder: JÄHNICHEN, Matthias, 69207 Sandhausen (DE); MOROZINI DE LIRA, Adriano, 71229 Leonberg (DE); DURM, Jürgen, 75417 Mühlacker (DE); FRISCH, Dietger, 71299 Wimsheim (DE); WESCH, Karl, 69429 Waldbrunn (DE)
(86) Internationale Anmeldenummer: PCT/EP2003/011618
(87) Internationale Veröffentlichungsnummer: WO 2004/039577

(56) Entgegenhaltungen:
- EP-A- 0 376 880
- US-A- 4 378 395
- US-A- 4 770 929

## Beschreibung

Die Erfindung betrifft mehrschichtige Laminate enthaltend mindestens zwei Bindemittelschichten und mindestens zwei Schichten aus faserhaltigen textilen Flächengebilden, ein Verfahren zu deren Herstellung, ihre Verwendung sowie ein Verfahren zum Versteifen und / oder Verstärken von flächigen Karosseriebauteilen.

Ausgelöst durch verbesserten Korrosionsschutz für metallische Substrate, leichtere Formbarkeit dieser dünnen Substrate sowie niedrigere Kosten und insbesondere wegen der Gewichtsersparnis und der damit verbundenen Ersparnis an Treibstoffen im Betrieb derartiger Fahrzeuge in Leichtbauweise, hat die Verwendung von dünnen Streifen, Platten oder Blechen im Fahrzeugbau in der jüngsten Zeit stark zugenommen. In der Vergangenheit wurden zur Versteifung entweder metallische Versteifungsplatten auf die dünnen Bleche aufgeschweißt oder aufgeklebt. Wegen des vorgenannten Erfordernis der Gewichtserspamis ist die Nachfrage nach leichten flächen- und rahmenversteifenden Systemen für verschiedenste Anwendungen im Automobilbau sehr groß. Bisher sind für diese Anwendungsfelder neben den vorgenannten Metallplatten Schichtkörpersysteme auf der Basis von Epoxidharzen und / oder Polyurethanen bekannt geworden.

EP 0056713 beschreibt ein Verbundmaterial für metallplattierte Artikel aus einem thermisch härtbarem Harz und einer Metallvorderseite, wobei zwischen der thermisch härtbaren Harzschicht und der Metallvorderseite eine Klebstoffschicht angeordnet ist, die einen Verbund zwischen der Metallvorderseite und thermisch härtbaren Harzschicht bewirken soll. Als Anwendungen für derartige Verbundmaterialien werden dekorative metallbeschichtete Bauelemente, metallbeschichtete Wassertanksektionen, metallbeschichtete Kunststoffrohre und Tanks sowie metallbeschichtete Komponenten für die Transportindustrie genannt. Versteifende Wirkungen derartiger Verbundkörper werden nicht offenbart.

EP 0278268 A2 beschreibt einen verstärkenden Schichtkörper geeignet zur Verstärkung von Metallpaneelen, Kunststoffpaneelen oder Sheet Moulding Compound-Schichtkörpern, der eine Feuchtigkeit undurchlässige Barriereschicht in einer thermisch härtbaren Klebstoffschicht eingebettet hat. Auf der dem zu verstärkenden Substrat abgewandten Seiten soll dabei eine Verstärkungsschicht angeordnet sein, die aus einem Glasfasergewebe bestehen kann. Als Feuchtigkeit undurchlässige Barriereschicht wird eine Aluminiumfolie vorgeschlagen. Diese Schrift schlägt als Anwendung für die verstärkenden Schichtkörper die Verstärkung von Stahlbauteilen wie Autopaneele vor.

EP 0061132 A2 beschreibt ein dreischichtiges Versteifungsmaterial bestehend aus einer ersten Harzschicht mit einem hohen E-Modul nach der Härtung, einer darunter angeordneten zweiten Harzschicht, die einen niedrigen E-Modul nach der Aushärtung hat und einer darunter angeordneten Schicht aus einem thermisch expandierbaren Material, wobei das expandierbare Material eine kleinere Fläche aufweist, als die beiden anderen thermisch härtbaren Schichten. Beim Erwärmen soll das expandierbare Material zu einem raupenförmigen Vorsprung expandieren und dann aushärten. Dabei soll die Randbereiche der beiden übrigen verstärkenden Schichten über die Ränder des raupenbildenden expandierbaren Materials hinausragen und mit dem zu versteifenden Material eine klebende Bindung eingehen.

Die EP-A-230666 beschreibt ein Verfahren zur Herstellung einer einkomponentigen hitzehärtbaren Zusammensetzung, welche beim Erhitzen ein Urethan-Epoxy-Silicon Interpenetrating Network (IPN) System bildet. Diese Schrift schlägt vor, aus diesen Zusammensetzungen metallverstärkende Schichtkörper ("Patches") herzustellen, die direkt auf ölhaltigen Metalloberflächen wie öligen Stahlblechen haftet. Das IPN soll dabei durch eine Polyepoxyverbindung, ein blockiertes Polyaminhärtungsagenz, ein kettenverlängertes Polyurethanprepolymer, bei dem einige Isocyanatgruppen des Prepolymers mit einem hydroxyfunktionellen Polysiloxan blockiert sind, gebildet werden.

EP-A-297036 beschreibt einen Schichtkörper bestehend aus einem Träger, z.B. harzgebundenen Glasfasergewebe auf das eine Schicht aus wärmehärtendem Harz aufgebracht ist. Um die klebrige Harzoberfläche zu schützen, ist eine Abdeckfolie aus einem bei Wärmeeinwirkung schrumpfenden Material vorgesehen. Diese Folie soll mit Schlitzen versehen sein, die sich nach einer Wärmevorbehandlung zum Öffnen erweitern, so dass ein Teil der klebrigen Oberfläche frei liegt. Damit soll es nicht mehr notwendig sein, vor dem Anbringen des Schichtkörpers die Schutzfolie abzuziehen. Über die Zusammensetzung der klebrigen Harzschicht werden keine Angaben gemacht.

EP-A-376880 beschreibt eine Schichtkörperanordnung zur Versteifung von flächigen Körpern umfassend eine Trägerschicht aus einem aushärtbaren Kunstharzmaterial in dem ein damit verbundenes oder darin eingebettetes Verstärkungsmaterial vorgesehen ist. Weiterhin ist eine auf der Trägerschicht aufgebrachte, dem zu versteifenden Körper zugewandte, Klebstoffschicht vorgesehen, die ein ggf. mit Füllstoffen und sonstigen Additiven versehenes härtbares Kunstharzmaterial umfasst. Um einen möglichst hohen Verstärkungseffekt ohne Deformation des flächigen Körpers (Blechs) zu erreichen, soll die Klebstoffschicht nach der Härtung des Kunstharzes einen höheren Elastizitätsmodul als das gehärtete Kunstharzmaterial der Trägerschicht besitzen, gleichzeitig sollen Trägerschicht und Klebstoffschicht im ausgehärteten Zustand zumindest annähernd die gleiche Wärmedehnzahl wie der zu versteifende flächige Körper aufweisen. Die Trägerschicht soll dabei aus einem Glasfasergewebe und einem Gemisch aus flüssigen Epoxidharzen und festen Epoxidharzen sowie Härtern bestehen, die Klebstoffschicht soll im Wesentlichen aus wärmehärtenden, selbsthaftenden Kunstharzen bestehen, die ebenfalls aus flüssigen und festen Epoxidharzen sowie Härtern und Füllstoffen aufgebaut ist.
Gemäß Anspruch 17 dieser Schrift soll die Schicht-Körperanordnung im Gegensatz zu der allgemeinen Lehre dieser Schrift, wie sie vorstehend kurz beschrieben wurde aus einer ausgehärteten Trägerschicht bestehen, die einen höheren Elastizitätsmodul besitzt als die ausgehärtete Klebstoffschicht. Es wird an keiner Stelle dieser Schrift ausgeführt, wann welche Schichtenkombination Verwendung finden soll.

Die EP-A-298024 beschreibt ein Verfahren zum Versteifen von Blechen und Kunststoff-Formkörpern mit Hilfe eines ein- oder mehrschichtigen flächigen Versteifungskörpers, bei dem zumindest eine Schicht aus einer unter Wärmeeinfluss härtenden Kunstharz aufweist. Dieser Versteifungskörper soll dabei zunächst einer ersten Wärmebehandlung unterworfen werden, bei der mindestens eine Oberfläche des Versteifungskörpers durch diese erste Wärmebehandlung klebrig wird. Anschließend soll der Versteifungskörper mit der klebrigen Oberfläche auf das zu versteifende Element aufgebracht werden und anschließend soll der Versteifungskörper einer zweiten Wärmebehandlung unterworfen werden, bis alle Schichten des Versteifungskörpers ausgehärtet sind. Es wird vorgeschlagen, dass eine Schicht des Verstärkungskörpers aus hitzehärtenden Epoxidharzen aufgebaut ist, die ggf. Glasfasergewebe enthält. Als zweite Schicht, die bei der ersten Wärmebehandlung klebrig werden soll, wird ein Schmelzkleber auf Epoxidbasis, eventuell auf Polyurethan- oder Copolyesterbasis vorgeschlagen. Alternativ soll diese Schicht aus einer unter Wärmewirkung schrumpfenden Folie bestehen, so dass nach Schrumpfung eine klebrige Schicht freigelegt wird.

EP 0053361 A1 beschreibt ein Klebstoffschichtmaterial zur Verstärkung von Metallblechen enthaltend eine erste Epoxidharzschicht und einen zweite Epoxidharzschicht, die auf die erste Epoxidharzschicht auflaminiert ist, wobei die erste Epoxidharzschicht nach der Aushärtung einen E-Modul aufweist, der ausreichend ist, um die Versteifung einer Metallplatte zu bewirken, wohingegen die zweite Epoxidharzschicht nach der Aushärtung durch Erwärmen einen E-Modul aufweisen soll, der nicht ausreichend ist, um eine Versteifung der zu versteifenden Metallplatte zu bewirken. Hierdurch soll bewirkt werden, dass die durch die Schrumpfung bei der Härtung der hochmoduligen Schicht auftretende Spannung reduziert wird, so dass die Verwerfung der Oberfläche der zu versteifenden Metallschicht reduziert wird.

WO 99/50057 schlägt ein dreischichtiges Versteifungsmaterial vor, das aus zwei Polymerschichten und einer Versteifungsschicht aufgebaut ist. Dabei soll die dem zu versteifende Substrat zugewandte Polymerschicht eine nachgiebige Schaumschicht nach der Aushärtung sein, während die äußere, auf der nachgiebigen Schaumschicht angeordnete Schicht eine Schicht eines Hartschaums ist. Die dritte Schicht soll eine Folie oder Glasfaserschicht oder ein Träger zur Bewirkung zusätzlicher Versteifung sein. Gemäß der Lehre dieser Schrift soll durch diese Schichtanordnung die durch den Schrumpf der harten Schicht beim Aushärten verursachte Spannung vom zu versteifenden Substrat fern gehalten werden.

Der bisher bekannt gewordene Stand der Technik zur Versteifung von dünnen, großflächigen Substraten wie Automobiltüren, Dachteilen, Kofferraumdeckeln oder Motorhauben löst jedoch das Problem des Verziehens der dünnwandigen Blech- oder Kunststoffpaneele durch den Schrumpf der versteifenden Schichten nur ungenügend, so dass sich diese marginalen Verwerfungen und Unebenheiten insbesondere bei großfähig einheitlich und glänzend lackierten Bauteilen immer noch störend abzeichnen.

Angesichts dieses Standes der Technik, bestand die Aufgabe der vorliegenden Erfindung darin, neue, mehrschichtige Laminate zum Versteifen von dünnen Bauteilen, insbesondere flächigen Karosserlebauteilen im Fahrzeugbau bereitzustellen, die einen durch den Härtungsprozess des Laminates bedingten Schrumpf der Bindemittelschichten soweit zu reduzieren und auszugleichen vermögen, dass die Spannungen nicht auf das zu versteifende Substrat übertragen werden, so dass die Abzeichnungseffekte des Versteifungskörpers ("read through effect ") vermieden werden.

Die erfindungsgemäße Lösung der Aufgabe ist den Patentansprüchen zu entnehmen. Sie besteht im Wesentlichen in der Bereitstellung mehrschichtiger Laminate, aufgebaut aus mindestens einer hitzehärtbaren und gegebenenfalls expandierbaren Bindemittelschicht und mindestens einer weiteren Schicht eines gegebenenfalls expandierbaren Bindemittels sowie mindesten zwei Schichten von faserhaltigen textilen Flächengebilden, wobei die Bindemittelschicht, die dem zu versteifenden Substrat zugewandt ist, einen gleichen oder niedrigeren E-Modul aufweist, als die zweite Bindemittelschicht. Zwischen den beiden Bindemittelschichten ist eine Schicht eines faserhaltigen textilen Flächengebildes angeordnet, die zweite Schicht eines faserhaltigen textilen Flächengebildes ist auf der Bindemittelschicht angeordnet, die dem zu versteifenden Substrat abgewandt ist.

Als E-Modul wird in dieser Anmeldung der Elastizitäts-Modul (auch "Young-Modul" genannt) der ausgehärteten Bindemittelschichten, ggf. als Kombination aus Bindemittelschicht und angrenzender textiler Schicht bezeichnet.

Ein weiterer Gegenstand der vorliegenden Erfindung ist ein Verfahren zum Versteifen oder zum Verstärken von flächigen Bauteilen aus Metall oder Kunststoff das die folgenden wesentlichen Verfahrensschritte beinhaltet:
(a) Extrudieren der ungehärteten Bindemittelschicht (12) ggf. auf eine Schutzfolie,
(b) Aufbringen der textilen Schicht (13),
(c) Extrudieren der Bindmittelschicht (14) auf die textile Schicht (13),
(d) Aufbringen der textilen Schicht (15) auf die Bindemittelschicht (14),
(e) ggf. Auswalzen der Randbereiche, so dass die Bindemittelschichten (12) und/oder (14) in der Mitte der Fläche eine höhere Schichtdicke als in den Randbereichen aufweist,
(f) ggf. Zuschneiden und Konfektionieren des Laminates,
(g) Aufbringen des Laminat-Formkörpers auf das zu versteifende Substrat,
(h) Aushärten des Laminates auf dem Substrat durch Erwärmen des Verbundes auf Temperaturen zwischen 110°C und 210°C, vorzugsweise zwischen 130°C und 180°C.

In einer weiteren Ausführungsform können die mehrschichtigen Laminate auch in zwei Stufen hergestellt werden, dazu wird die ungehärtete Bindemittelschicht (12) auf die textile Schicht (13) aufgebracht und in einem separaten Arbeitsschritt wird die Bindemittelschicht (14) auf die textile Schicht (15) aufgebracht. Je nach Maschinenauslegung können auch die Gewebeschichten auf die Bindemittelschichten aufgebracht werden. Anschließend werden die beiden zweischichtigen Systeme separat einer Formgebung durch Stanzen oder Schneiden unterworfen und anschließend durch Verpressen mit einander zum vierschichtigen Laminat verbunden, ggf. kann die verbleibende freie Seite der unausgehärteten Bindemittelschicht (12) während der Lagerung des Laminates durch eine Schutzfolie bedeckt sein, die unmittelbar vor dem Aufbringen des Laminates auf das zu versteifende Substrat entfernt wird.

In einer besonderen Ausführungsform können die Flächen der Bindemittelschicht (14) und des textilen Flächengebildes (15), die dem zu versteifenden Substrat abgewandt sind, kleiner sein als die Fläche der Bindemittelschicht und des textilen Flächengebildes, die dem zu versteifenden Substrat zugewandt sind. Die Distanz der Randlinien zwischen den kleineren und den größeren Flächen kann dabei zwischen 0,05 und 3 cm, vorzugsweise zwischen 1 und 1,5 cm über den gesamten Randbereiche betragen. Die Distanzabmessungen werden im wesentlichen durch die Gesamtfläche und -geometrie des Versteifungslaminates und die Eigenschaften des zu versteifenden Substrats bedingt.

In einer weiteren Ausführungsform können sowohl die dem zu versteifenden Substrat zugewandte Bindemittelschicht als auch die dem zu versteifenden Substrat abgewandte Bindemittelschicht zu den Randbereichen hin eine abfallende Schichtstärke aufweisen. Auch diese Maßnahme kann eine Reduzierung der schrumpfbedingten Spannungen des versteiften Laminates bewirken.

Eine weitere Minderungen des Schrumpfes kann dadurch bewirkt werden, dass die Kanten der Schichten nicht geradlinig sondern in Form einer Welle oder sägezahnförmig verlaufen.

Weiterhin kann ein Anbringen von Löchern oder Schlitzen durch sämtliche Laminatschichten, oder nur durch die dem zu versteifenden Substrat abgewandte Bindemittelschicht und die Gewebeschicht (15), eine Minderung der Spannungen durch Schrumpf bewirken. Dabei können die Löcher oder Schlitze im gestaffelten Reihen angeordnet sein. In ausgehärtetem Zustand beträgt der E-Modul der dem Substrat abgewandten Bindemittelschicht 400 bis 1400 MPa. Der E-Modul der Bindemittelschicht, die dem zu versteifenden Substrat zugewandt ist, liegt zwischen 0,2 und 1400 MPa, vorzugsweise zwischen 30 und 1400 MPa.

Als faserhaltige zusätzlich versteifende Flächengebilde können Vliese, Gewebe oder Gewirke aus Aramidfasern, Kohlenstofffasem, Glasfasern, Polyamidfasern, Polyimidfasern, Polyethylenfasern, Polypropylenfasern oder Polyesterfasern verwendet werden. Dabei bewirken diese textilen Flächengebilde nicht nur eine zusätzliche Versteifung, insbesondere die zwischen den beiden Bindemittelschichten angeordnete textile Schicht kann zusätzlich die durch Schrumpf während des Härtungsvorganges der Bindemittelschichten hervorgerufenen Spannungen aufnehmen und ausgleichen und somit zur Minimierung bzw. Eliminierung der sichtbaren Verwerfungen des versteiften Substrates beitragen, so dass keine sichtbaren Abzeichnungen des Versteifungselementes auf der Außenseite des Substrates zu beobachten sind.

Als Bindemittel für die beiden Mittelschichten eignen sich insbesondere einkomponentige thermisch härtbare Systeme wie z.B. einkomponentige Epoxidharz Bindemittelmischungen wie sie beispielsweise in der WO 00/52086 auf den Seiten 6 bis 11 beschrieben sind. Grundsätzlich eignen sich jedoch auch einfacher aufgebaute Epoxidharzmischungen aus ein oder zwei Epoxidharzen und thermisch aktivierbaren Härtern, sowie Füllstoffen. Weiterhin geeignet sind Bindemittelsysteme auf der Basis von ungesättigte Doppelbindungen enthaltenden Flüssigkautschuken ggf. in Abmischung mit Festkautschuken und Vulkanisationsmitteln, Vulkanisationsbeschleunigern, sowie Katalysatoren, wie sie beispielsweise in der WO 96/23040 auf den Seiten 6 bis 10 oder in der EP 0793697 B1 auf der Seite 4 und 5 beschrieben sind. Für die Bindemittelschicht, die dem zu versteifenden Substrat zugewandt ist, eignen sich auch niedermodulige Bindemittelsysteme auf Kautschukbasis, insbesondere auf der Basis von Butylkautschuken, die keine vemetzenden Systeme enthalten und nach der Aushärtung des versteifenden Laminates thermoplastisch, im Extremfall sogar dauerplastisch, bleiben und somit ideal geeignet sind, starke, durch Schrumpf bedingte Spannungen auszugleichen. Weiterhin eignen sich thermisch härtbare Polyurethan-Systeme für die beiden Bindemittelschichten, insbesondere wenn die Aushärtung bei niedrigeren Temperaturen, beispielsweise in der Lacklinie bei der Automobilfertigung erfolgt. Weiterhin eignen sich Hybridsysteme auf der Basis von reaktiven Epoxidharzen und Polyurethan-Polymeren zur Formulierung der Bindemittelschichten. Weiterhin können für die niedermodulige Schicht (12) dünne, folienartige Klebeschichten eingesetzt werden, die auf der dem zu versteifenden Substrat zugewandten Seite der Gewebeschicht (13) aufgebracht werden und bei den gegebenen Härtungsbedingungen stabil bleiben und ausreichend Haftung zu Substrat und Gewebeschicht (13) aufbauen.

Weiterhin eignen sich als Polymere für die Bindemittel Blockcopolymere vom Typ AB bzw. ABA aus Styrol und Butadien, Styrol und Isopren oder deren Hydrierungsprodukte. Dabei können diese Polymeren sowohl in ihrer reaktiven Form als vemetzungsfähige Polymere, die reaktive Gruppen enthalten, als auch in ihrer nicht reaktiven Form als thermoplastische Elastomere eingesetzt werden.

Grundsätzlich bestehen die Bindemittelschichten neben den Polymeren noch aus Füllstoffen, ggf. Weichmachern und Extendern, Vernetzungsmitteln und sonstigen an sich bekannten und üblichen Hilfs- und Zusatzstoffen wie Farbpigmenten, Alterungsschutzmitteln sowie ggf. Treibmitteln.

Vorzugweise werden die erfindungsgemäßen mehrschichtigen Laminate im Rohbau im Fahrzeugbau auf die zu versteifenden Substrate appliziert, so dass die Aushärtung der härtbaren Schichten in dem Ofen erfolgt, der kathodischen Tauchlackierung (KTL) nachgeschaltet ist. In dem KTL-Ofen härten die Bindemittelschichten bei Temperaturen zwischen 110 °C und 210 °C, vorzugsweise zwischen 130°C und 180 °C aus.

Es ist jedoch auch möglich, die versteifenden mehrschichtigen Laminate erst zu einem späteren Zeitpunkt der Fahrzeugfertigung, nämlich in der so genannten Lacklinie nach dem KTL-Ofen zu applizieren. Da die nachfolgenden Einbrennöfen der Lacklinie in der Regel nur noch niedrigere Temperaturbereiche im Vergleich zum KTL-Ofen aufweisen, empfiehlt es sich in diesem Fall Bindemittelsysteme zu verwenden, die bei diesen niedrigeren Temperaturen aushärten wie es z.B. bei Polyurethansystemen der Fall ist.

Die dem zu versteifenden Substrat zugewandte Bindemittelschicht kann dabei sowohl nur rein klebende Funktionen als auch eine versteifende Funktion als auch ggf. zusätzlich eine akustische dämpfende (vibrations- bzw. körperschalldämpfende) Eigenschaft aufweisen. Die Bindemittelsysteme der beiden Schichten werden dabei so ausgewählt, dass eine Migration von Bestandteilen der einen Schicht in die andere Schicht nicht möglich ist. Weiterhin sollen beide Bindemittelschichten eine feste Bindung zu den textilen Flächengebilden ausbilden, so dass es hier zu keiner Delaminierung kommen kann. Die Bindemittelschichten weisen dabei im ausgehärteten Zustand Schichtstärken zwischen 0,01 und 3 mm auf, wobei in bevorzugten Ausführungsformen die Bindemittelschichten keine gleichmäßigen Schichtstärken aufweisen, sondern im Zentralbereich der Fläche eine höhere Schichtstärke aufweisen, die bis zu den Randbereichen gegen 0 gehen kann.

Die so hergestellten Formkörper können ggf. zwischengelagert werden oder zum Endanwender, in der Regel dem Automobilhersteller, transportiert werden. Dort wird die ggf. vorhandene Schutzfolie von der Bindemittelschicht entfernt, anschließend wird der Formkörper auf das zu verstärkende oder zu versteifende Bauteil aufgebracht und die Aushärtung des Bindemittels erfolgt bei Temperaturen zwischen 110 °C und 210 °C, vorzugsweise zwischen 130 °C und 180 °C in den Lacktrockenöfen, in der Regel in dem Ofen zur Aushärtung der Elektrotauchlackbeschichtung.

Die erfindungsgemäßen mehrschichtigen Laminate zum Versteifen sollen nachfolgend anhand einiger Zeichnungen näher erläutert werden. Es zeigen:
- Figur 1: zeigt den prinzipiellen Schichtaufbau des erfindungsgemäßen Laminates aufgebracht auf das zu versteifende Substrat,
- Figur 2: eine Aufsicht auf die Fläche einer bevorzugten Ausführungsform des Mehrschichtlaminates,
- Figur 3: einen Schnitt durch die Figur 2 an der Linie A-A,
- Figur 4: eine weitere spezielle Ausführungsform eines Schichtkörpers,
- Figur 5: einen Schnitt durch den Schichtkörper gemäß Figur 4 an der Linie A-A.

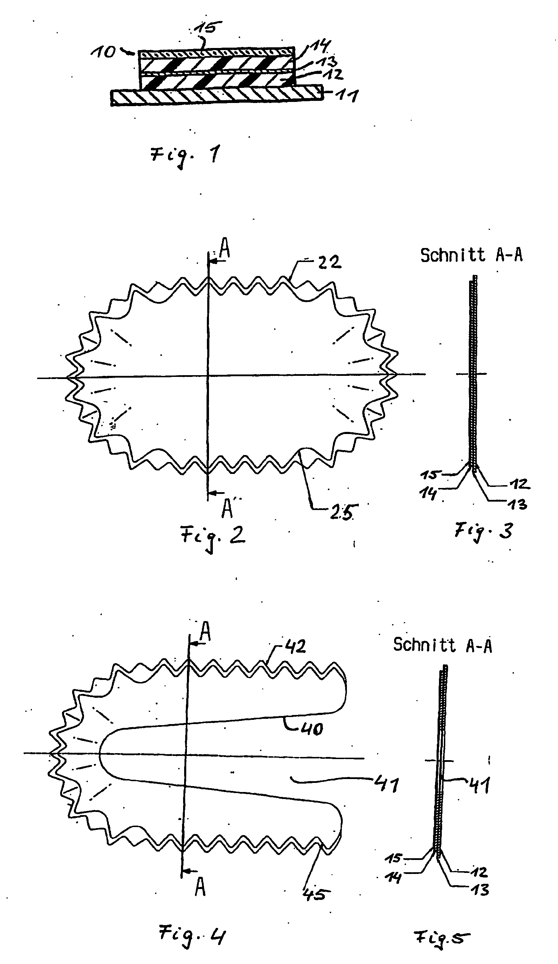

**Figur 1** zeigt den prinzipiellen Schichtaufbau (10) eines mit einem vierschichtigen versteifenden Laminat beschichteten Substrats gemäß vorliegender Erfindung. Auf dem zu versteifenden Substrat (11) ist die dem Substrat zugewandte Bindemittelschicht (12) aufgebracht, die nach dem Aushärten dauerhaft klebend mit dem Substrat verbunden ist. Zwischen dieser ersten Bindemittelschicht (12) und der zweiten Bindemittelschicht (14) ist eine erste Schicht eines textilen Flächengebildes (13) angeordnet, die im ausgehärteten Zustand des Schichtsystem eine dauerhafte Bindung zu beiden Bindemittelschichten eingeht und in der Lage ist, einen Teil der durch den Schrumpf der Aushärtung des Bindemittelsystems und beim Erkalten des Schichtkörpers auftretenden Zugspannungen aufzunehmen, so dass diese nicht auf das zu versteifende Substrate (11) einwirken können. Auf der Bindemittelschicht (14) ist eine weitere Schicht eines textilen Flächengebildes (15) aufgebracht, die ihrerseits nach dem Aushärtungsprozess des Schichtkörpers dauerhaft haftend mit dem Schichtsystem verbunden ist. Dabei bewirkt die Kombination aus Bindemittelschicht (14) und textiler Schicht (15) den größten Teil der versteifenden Wirkung. Aus diesem Grunde weist die Bindemittelschicht (14) im ausgehärteten Zustand in vielen Anwendungsfeldern einen höheren E-Modul auf, als die Bindemittelschicht (12), die E-Module der beiden Schichten können jedoch im Grenzfall auch gleich sein.

**Figur 2** zeigt eine Aufsicht auf die Fläche einer Ausführungsform des mehrschichtigen Laminates, bei der die Fläche im Wesentlichen eine elliptische Grundform hat und die Randbereiche der dem zu versteifenden Substrate zugewandten Bindemittelschicht (22) sowie die Randbereiche der dem zu versteifenden Substrat abgewandten Bindemittelschicht (25) eine wellenförmige Begrenzungslinie aufweisen. Gleichzeitig ist aus dieser Figur ersichtlich, dass die dem zu versteifenden Substrat zu gewandte Bindemittelschicht eine größere Abmessung hat, als die dem zu versteifenden Substrat abgewandte Bindemittelschicht, so dass die dem Substrat nahe Bindemittelschicht und Textilschicht in ihrem Randbereich über die darüber liegende dem Substrat abgewandte Bindemittelschicht und Textilschicht hinausragt.

Die **Figur 3** zeigt einen Schnitt durch das mehrschichtige Laminat an der Linie A-A der Figur 2. Darin ist die dem zu versteifenden Substrat zugewandte Bindemittelschicht (12) sowie die darauf folgende textile Gewebeschicht (13) ebenfalls flächenmäßig größer und ragt über die dem zu versteifende Substrat abgewandte Bindemittelschicht (14) sowie die darüber liegende textile Gewebeschicht (15) hinaus. Das zu versteifende Substrat ist in dieser Figur nicht dargestellt. Prinzipiell kann ein gemäß Figur 2 bzw. Figur 3 dargestelltes mehrschichtiges Laminat auch eine im wesentliche rechteckige Form aufweisen, ggf. mit abgerundeten Ecken. Weiterhin können sowohl eine rechteckige Ausführungsform als auch die dargestellte elliptische Ausführungsform durch gradlinige Kantenbereiche begrenzt werden.

In der **Figur 4** ist eine Sonderform in der Aufsicht auf die Fläche dargestellt, bei der das Laminat eine halbelliptische Aussparung (41) aufweist, die weder Bindemittel noch eine Textilschicht aufweist, sondern einen kompletten Durchbruch durch das Laminat aufweist. Im Bereich dieses Durchbruchs weisen in diesem Fall die Schnittkanten beider Bindemittel und Textilschichten einen gradlinigen Verlauf auf und beide Schnittkanten liegen deckungsgleich übereinander. Die Außenkanten der Bindemittelschichten (42) und (45) weisen wiederum wellenförmige Begrenzungen auf und die dem zu versteifenden Substrat zugewandte Bindemittelschicht (42) ragt im Randbereich wiederum über die darüber liegende Bindemittelschicht (45) mit deren Textilschicht hinaus.

Die **Figur 5** stellt einen Schnitt entlang der Linie A-A durch das vierschichtige Laminat gemäß Figur 4 dar, hier ist wiederum die Bindemittelschicht (12) dem zu versteifende Substrat zugewandt die textile Flächengebildeschicht (13) hat die gleichen Außenabmessungen wie die Bindemittelschicht (12) und liegt wiederum zwischen der letztgenannten Bindemittelschicht und der dem zu versteifenden Substrat abgewandten Bindemittelschicht (14) auf der sich die zweite textile Flächengebildeschicht (15) befindet. Weiterhin ist in der Figur 5 die Aussparung (41) dargestellt.

In den vorgenannten Figuren sind nur jeweils das Prinzip des erfindungsgemäßen mehrschichtigen Laminates sowie zwei spezielle Ausführungsformen dargestellt, grundsätzlich können die vierschichtigen Versteifungslaminate in ihren geometrischen Abmessungen dem jeweiligen Verwendungszweck angepasst werden und jede flächige geometrische Form annehmen. Weiterhin können entweder alle vier Schichten durch Löcher oder Schlitze durchbrochen werden oder die schlitz- oder lochartigen Durchbrüche erstrecken sich nur auf die dem zu versteifenden Substrat abgewandte Bindmittelschicht (14) und Gewebeschicht (15).

Obwohl der vorbeschriebene vierschichtige Aufbau der mehrschichtigen versteifenden Laminate der bevorzugte Aufbau ist, lassen sich auch mehrschichtige Laminate darstellen, die mehr als vier Schichten aufweisen.

Hauptanwendungsgebiet für die erfindungsgemäßen mehrschichtigen Laminate sind dünnwandige zu versteifende Blechstrukturen oder Kunststoffplatten wie sie im Fahrzeugbau für Türen, Dachteile, Motorraumdeckel oder Kofferraumdeckel sowie Armaturenbretter und Instrumententafeln Verwendung finden. Die Knick- und Biegefestigkeit sowie die Vibrationseigenschaften des Substrates werden verbessert. Prinzipiell lassen sich derartige versteifende Laminatkörper jedoch auch im Apparatebau oder im Haushaltsgerätebau einsetzen.

## Patentansprüche

1. Mehrschichtiges Laminat zum Versteifen von flächigen Substraten enthaltend mindestens zwei thermisch härtbare Bindemittelschichten und zwei Schichten aus faserhaltigen textilen Flächengebilden **gekennzeichnet durch** eine dem zu versteifenden Substrat (11) zugewandte Bindemittelschicht (12), eine dem zu versteifenden Substrat (11) abgewandte Bindemittelschicht (14), eine zwischen diesen Bindemittelschichten angeordnete Schicht eines faserhaltigen textilen Flächengebildes (13) sowie eine auf der dem zu versteifenden Substrat (11) abgewandte Bindemittelschicht (14) angeordnete zweite Schicht eines faserhaltigen textilen Flächengebildes (15), wobei die dem zu versteifenden Substrat zugewandte Bindemittelschicht (12) im ausgehärteten Zustand haftend mit dem zu versteifenden Substrat verbunden ist und einen gleichen oder niedrigeren E-Modul aufweist als die zweite Bindemittelschicht (14).

2. Laminat nach Anspruch 1 **dadurch gekennzeichnet, dass** die Flächen der Bindemittelschicht (14) und des textilen Flächengebildes (15) kleiner sind als die Flächen der Bindemittelschicht (12) und des textilen Flächengebildes (13).

3. Laminat nach Anspruch 1 oder 2 **dadurch gekennzeichnet, dass** die dem zu versteifenden Substrat zugewandte Bindemittelschicht (12) und das Flächengebilde (13) zu den Randbereichen eine abfallende Schichtstärke aufweist.

4. Laminat nach Anspruch1 bis 3 **dadurch gekennzeichnet, dass** die dem zu versteifenden Substrat abgewandte Bindemittelschicht (14) und das Gewebe (15) zu den Randbereichen eine abfallende Schichtstärke aufweisen.

5. Laminat nach Anspruch 1 bis 4 **dadurch gekennzeichnet, dass** die Kanten nicht geradlinig sondern in Form einer Welle oder sägezahnförmig verlaufen.

6. Laminat nach Anspruch 1 bis 5 **dadurch gekennzeichnet, dass** als faserhaltige Flächengebilde Vliese, Gewebe oder Gewirke aus Aramidfasern, Kohlenstofffasern, Glasfasern, Polyamidfasern, Polyimidfasern, Polyethylenfasem, Polypropylenfasern oder Polyesterfasern verwendet werden.

7. Laminat nach mindestens einem der vorhergehenden Ansprüche, **dadurch gekennzeichnet, dass** die Bindemittelschicht (14) im ausgehärteten Zustand einen E-Modul von 400 bis 1400 MPa und die Bindemittelschicht (12) einen E-Modul von 0,2 bis 1400 MPa, vorzugsweise von 30 bis 1400 MPa aufweist.

8. Laminat nach mindestens einem der vorhergehenden Ansprüche, **dadurch gekennzeichnet, dass** das Laminat Löcher oder Schlitze aufweist, die durch sämtliche Laminatschichten gehen oder nur die dem zu versteifenden Substrat abgewandte Bindemittelschicht (14) und Gewebeschicht (15) umfassen.

9. Laminat nach Anspruch 7, **dadurch gekennzeichnet, dass** die Löcher oder Schlitze in gestaffelten Reihen angeordnet sind.

10. Verwendung des Laminates nach mindestens einem der vorhergehenden Ansprüche zum Versteifen von Türen, Dachteilen, Motorraumdeckeln und Kofferraumdeckeln im Fahrzeugbau.

11. Verfahren zum Versteifen von dünnen flächigen Substraten **gekennzeichnet durch** die folgenden wesentlichen Verfahrensschritte
(a) Extrudieren der ungehärteten Bindemittelschicht (12) ggf. auf eine Schutzfolie,
(b) Aufbringen der textilen Schicht (13),
(c) Extrudieren der Bindmittelschicht (14) auf die textile Schicht (13),
(d) Aufbringen der textilen Schicht (15) auf die Bindemittelschicht (14),
(e) ggf. Auswalzen der Randbereiche, so dass die Bindemittelschicht 12 oder 14 in der Mitte der Fläche eine höhere Schichtdicke als in den Randbereichen aufweist,
(f) ggf. Zuschneiden oder Stanzen und Konfektionieren des Laminates,
(g) Aufbringen des Laminat-Formkörpers auf das zu versteifende Substrat,
(h) Aushärten des Laminates auf dem Substrat **durch** Erwärmen des Verbundes auf Temperaturen zwischen 130°C und 210°C, vorzugsweise zwischen 150°C und 180°C.

12. Verfahren nach Anspruch 11 **dadurch gekennzeichnet, dass** Schritte (a) und (b) bzw. (c) und (d) separat durchgeführt werden und die separaten Schichtkörper aus Bindemittelschicht (12) textiler Schicht (13) sowie Bindemittelschicht (14) und textiler Schicht (15) separat einer Formgebung durch Stanzen oder Schneiden unterworfen werden und anschließend durch Verpressen miteinander zum vierschichtigen Laminat geformt werden, so dass sich die Schritte (g) und (h) anschließen können.

13. Verfahren nach Anspruch 11 oder 12 **dadurch gekennzeichnet, dass** die Schritte (g) und (h) räumlich und / oder zeitlich getrennt von den Schritten a) bis (f) durchgeführt werden.

## Revendications

1. Stratifié multicouche pour le renforcement de substrats à deux dimensions, contenant au moins deux couches de liant thermodurcissable et deux couches constituées par des produits plats textiles fibreux, **caractérisé par** une couche de liant (12) tournée vers le substrat (11) à renforcer, une couche de liant (14) se détournant du substrat (11) à renforcer, une couche d'un produit plat textile fibreux (13) disposée entre ces deux couches de liant, ainsi qu'une deuxième couche d'un produit plat textile fibreux (15) disposée sur la couche de liant (14) se détournant du substrat (11) à renforcer, la couche de liant (12) tournée vers le substrat à renforcer étant reliée, à l'état durci, par adhérence avec le substrat à renforcer et présentant un module d'élasticité identique ou inférieur à celui de la deuxième couche de liant (14).

2. Stratifié selon la revendication 1, **caractérisé en ce que** les surfaces de la couche de liant (14) et du produit plat textile (15) sont inférieures aux surfaces de la couche de liant (12) et du produit plat textile (13).

3. Stratifié selon la revendication 1 ou 2, **caractérisé en ce que** la couche de liant (12) tournée vers le substrat à renforcer et le produit plat (13) présentent une épaisseur de couche qui diminue en direction des zones marginales.

4. Stratifié selon les revendications 1 à 3, **caractérisé en ce que** la couche de liant (14) se détournant du substrat à renforcer et le tissu (15) présentent une épaisseur de couche qui diminue en direction des zones marginales.

5. Stratifié selon les revendications 1 à 4, **caractérisé en ce que** les arêtes ne s'étendent pas en ligne droite, mais en formant une vague ou sous la forme de dents de scie.

6. Stratifié selon les revendications 1 à 5, **caractérisé en ce qu'**on utilise, à titre de produit plat fibreux, des non-tissés, des tissus ou des tissus à mailles constitués par des fibres d'aramide, des fibres de carbone, des fibres de verre, des fibres de polyamide, des fibres de polyimide, des fibres de polyéthylène, des fibres de polypropylène ou des fibres de polyester.

7. Stratifié selon au moins une des revendications précédentes, **caractérisé en ce que** la couche de liant (14), à l'état durci, présente un module d'élasticité de 400 à 1400 MPa et la couche de liant (12) présente un module d'élasticité de 0,2 à 1400 MPa, de préférence de 30 à 1400 MPa.

8. Stratifié selon au moins une des revendications précédentes, **caractérisé en ce que** le stratifié présente des trous ou des fentes qui traversent la totalité des couches du stratifié ou qui comprennent uniquement la couche de liant (14) se détournant du substrat à renforcer et la couche de tissu (15).

9. Stratifié selon la revendication 7, **caractérisé en ce que** les trous ou les fentes sont disposés en rangées échelonnées.

10. Utilisation du stratifié selon au moins une des revendications précédentes pour le renforcement de portières, d'éléments de toits, de capots de compartiments moteurs et de capots de coffres dans l'industrie de construction automobile.

11. Procédé pour le renforcement de substrats minces à deux dimensions, **caractérisé par** les étapes opératoires essentielles suivantes consistant à :
(a) extruder la couche de liant non durcie (12), le cas échéant sur une feuille de protection,
(b) appliquer la couche textile (13),
(c) extruder la couche de liant (14) sur la couche textile (13),
(d) appliquer la couche textile (15) sur la couche de liant (14),
(e) le cas échéant, laminer les zones marginales, de telle sorte que la couche de liant (12) ou (14) présente, au milieu de la surface, une épaisseur de couche supérieure à celle en vigueur dans les zones marginales,
(f) le cas échéant, découper ou estamper et confectionner le stratifié,
(g) appliquer le corps façonné du stratifié sur le substrat à renforcer,
(h) durcir le stratifié sur le substrat par chauffage du composite à des températures entre 130 °C et 210 °C, de préférence entre 150 °C et 180 °C.

12. Procédé selon la revendication 11, **caractérisé en ce qu'**on met en oeuvre les étapes (a) et (b), respectivement (c) et (d), de manière séparée, et on soumet les corps stratifiés séparés constitués par la couche de liant (12), la couche textile (13), ainsi que la couche de liant (14) et la couche textile (15), séparément à un façonnement par estampage ou par découpe, et on les façonne ensuite par compression réciproque pour obtenir un stratifié constitué de quatre couches, de telle sorte que l'on mettre en oeuvre les étapes (g) et (h) directement à la suite des premières citées.

13. Procédé selon la revendication 11 ou 12, **caractérisé en ce qu'**on met en oeuvre les étapes (g) et (h) de manière séparée dans l'espace et/ou dans le temps par rapport aux étapes (a) à (f).

## Claims

1. A multilayer laminate for stiffening flat substrates comprising at least two heat-curable binder layers and two layers of fiber-containing flat textile materials, **characterized by** a binder layer (12) facing the substrate (11) to be stiffened, a binder layer (14) remote from the substrate (11) to be stiffened, a layer of a fiber-containing flat textile material (13) arranged between those binder layers and a second layer of a fiber-containing flat textile material (15) arranged on the binder layer (14) remote from the substrate (11) to be stiffened, the binder layer (12) facing the substrate to be stiffened being adhesively joined to the substrate to be stiffened and having the same elasticity modulus as, or a lower elasticity modulus than, the second binder layer (14).

2. A laminate as claimed in claim 1, **characterized in that** the surface areas of the binder layer (14) and the flat textile material (15) are smaller than the surface areas of the binder layer (12) and the flat textile material (13).

3. A laminate as claimed in claim 1 or 2, **characterized in that** the binder layer (12) facing the substrate to be stiffened and the flat textile material (13) decrease in layer thickness towards their edges.

4. A laminate as claimed in claims 1 to 3, **characterized in that** the binder layer (14) remote from the substrate to be stiffened and the fabric (15) decrease in layer thickness towards their edges.

5. A laminate as claimed in claims 1 to 4, **characterized in that** the edges are not straight, but assume a wave or saw tooth profile.

6. A laminate as claimed in claims 1 to 5, **characterized in that** the fiber-containing flat textile materials used are selected from nonwoven, woven or knitted fabrics of aramid fibers, carbon fibers, glass fibers, polyamide fibers, polyimide fibers, polyethylene fibers, polypropylene fibers or polyester fibers.

7. A laminate as claimed in at least one of the preceding claims, **characterized in that**, in the cured state, the binder layer (14) has an elasticity modulus of 400 to 1,400 MPa while the binder layer (12) has an elasticity modulus of 0.2 to 1,400 MPa and preferably in the range from 30 to 1,400 MPa.

8. A laminate as claimed in at least one of the preceding claims, **characterized in that** the laminate has holes or slots which extend through all layers of the laminate or only through the binder layer (14) remote from the substrate to be stiffened and the fabric layer (15).

9. A laminate as claimed in claim 7, **characterized in that** the holes or slots are arranged in staggered rows.

10. The use of the laminate claimed in at least one of the preceding claims for stiffening doors, roof parts, hood and trunk lids in motor vehicle construction.

11. A process for stiffening thin, flat substrates, **characterized by** the following key process steps:
(a) extruding the uncured binder layer (12) optionally onto a protective film,
(b) applying the textile layer (13),
(c) extruding the binder layer (14) onto the textile layer (13),
(d) applying the textile layer (15) to the binder layer (14),
(e) optionally rolling down the edges so that the binder layer (12 or 14) is thicker in the middle than at the edges,
(f) optionally cutting or stamping the laminate to size and making it up,
(g) applying the shaped laminate to the substrate to be stiffened,
(h) curing the laminate on the substrate by heating them both to temperatures of 130°C to 210°C and preferably to temperatures of 150°C to 180°C.

12. A process as claimed in claim 11, **characterized in that** steps (a) and (b) or (c) and (d) are carried out separately and the separate laminates of binder layer (12) and textile layer (13) and binder layer (14) and textile layer (15) are separately shaped by stamping or cutting and are then made into the four-layer laminate by pressing to together, so that steps (g) and (h) can then be carried out.

13. A process as claimed in claim 11 or 12, **characterized in that** steps (g) and (h) are carried out separately in time and/or space from steps (a) to (f).
